# FASCICULE DE BREVET EUROPEEN

(11) **EP 4 077 067 B1**
(45) Date de publication et mention de la délivrance du brevet: **07.02.2024**
(21) Numéro de dépôt: 20820403.2
(22) Date de dépôt: 08.12.2020
(51) Int. Cl.: B60S 1/04, B62D 25/08

(54) **DISPOSITIF DE FIXATION D'ÉLÉMENTS FONCTIONNELS EN PARTIE AVANT D'UN VÉHICULE AUTOMOBILE**
VORRICHTUNG ZUM BEFESTIGEN VON FUNKTIONSELEMENTEN AM VORDEREN ABSCHNITT EINES KRAFTFAHRZEUGES
DEVICE FOR SECURING FUNCTIONAL ELEMENTS TO THE FRONT PORTION OF A MOTOR VEHICLE

(30) Priorité: 19.12.2019 FR 1914836
(43) Date de publication de la demande: 26.10.2022
(73) Titulaire: Renault s.a.s, 92100 Boulogne Billancourt (FR); NISSAN MOTOR Co., Ltd., Yokohama-shi, Kanagawa 221-0023 (JP)
(72) Inventeur: DUEZ, Mickael, 78760 Pontchartrain (FR); RUBION, Pascal, 78310 COIGNERES (FR)
(74) Mandataire: Renault Group
(86) Numéro de dépôt international: PCT/EP2020/084995
(87) Numéro de publication internationale: WO 2021/122133

(56) Documents cités:
- FR-A1- 3 056 958
- US-A- 5 946 763

## Description

L'invention concerne un dispositif de fixation d'éléments fonctionnels d'un véhicule automobile à la cloison de chauffage transversale, située à la séparation entre l'habitacle et le compartiment avant du véhicule. L'invention concerne aussi une partie avant d'un véhicule automobile, agencée en avant d'une cellule formant habitacle du véhicule, et comportant une cloison de chauffage transversale équipée dudit dispositif de fixation.

Le document FR 3 056 958 A1 divulgue un dispositif de fixation d'éléments fonctionnels d'un véhicule automobile à la cloison de chauffage transversale du véhicule, comprenant un support de fixation constitué d'une pièce monobloc allongée.

A l'avant d'un véhicule automobile, il est usuel de fixer des éléments fonctionnels constitués de l'essuie-vitre, d'un boitier à eau, et d'un connecteur électrique. Le connecteur électrique permet d'alimenter en courant électrique, depuis une batterie, un ou plusieurs organes électriques du véhicule dont l'essuie-vitre qui comprend un ou deux balais d'essuyage du pare-brise actionné(s) par un moteur électrique.

Le boitier à eau est un caisson de récupération d'eau, souvent appelé simplement boîte à eau. Il présente une forme allongée, sensiblement comme une gouttière, et s'étend sous une grille d'auvent située à la base du pare-brise du véhicule. Ce caisson permet de récupérer et drainer les eaux de ruissellement comme l'eau de pluie ou les eaux de nettoyage du pare-brise et plus généralement les eaux de nettoyage du véhicule, ces eaux étant évacuées vers l'extérieur à l'aide de conduits. Ce boitier à eau permet aussi d'alimenter en air l'intérieur de l'habitacle du véhicule : ledit caisson récupère de l'air ambiant lorsque le véhicule roule et le renvoie vers l'intérieur au travers d'un canal conduisant au système d'aération et/ou de climatisation.

Ces dits éléments fonctionnels sont fixés séparément et en des points plus ou moins éloignés les uns des autres sur la cloison de chauffage transversale avant, formant une paroi de séparation entre l'habitacle et le compartiment avant du véhicule qui comprend en général le moteur. Cette cloison prolonge la partie supérieure du tablier avant du véhicule. Le lieu et les moyens de fixation relatifs à ces divers éléments varient d'un modèle de véhicule à un autre, notamment selon l'espace disponible.

Ceci implique d'avoir un grand nombre de pièces de fixation pour chaque élément et chaque modèle, et engendre une consommation de temps puisqu'il faut fabriquer et manipuler trois pièces unitaires de fixation et faire trois interventions sur un véhicule donné. Il faut disposer de trois outils de fabrication des éléments de fixation unitaires.

L'invention vise à résoudre au moins en partie ces inconvénients.

A cet effet, l'invention fournit un dispositif de fixation d'éléments fonctionnels d'un véhicule automobile à la cloison de chauffage transversale du véhicule, comprenant un support de fixation constitué d'une pièce monobloc allongée comportant trois éléments de fixation disposés suivant l'axe principal de ladite pièce, lesdits éléments de fixation étant constitués d'un premier pontet de fixation récepteur d'un essuie-vitre, d'un second pontet de fixation récepteur d'un boitier à eau, et d'une patte latérale de fixation réceptrice d'un connecteur électrique, ledit second pontet étant situé entre ledit premier pontet de fixation de l'essuie-vitre et ladite patte latérale de fixation, et ledit dispositif comportant des moyens de réglage de la position de fixation de ladite pièce monobloc à la cloison de chauffage.

Le dispositif de fixation selon l'invention présente l'avantage d'avoir une pièce unique comme support de fixation de ces trois éléments fonctionnels du véhicule que constituent l'essuie-vitre, le boitier à eau et un connecteur électrique.

Lesdits moyens de réglage permettent la mise en géométrie de la pièce monobloc.

Plus particulièrement selon l'invention, les formes respectives desdits premier et second pontets sont adaptées dans leur hauteur, leur surface et leur inclinaison à la disposition relative des éléments fonctionnels à fixer et par rapport à l'agencement de la partie avant du véhicule où ils seront installés.

Selon un mode préféré de l'invention, ledit premier pontet et ledit second pontet comprennent chacun un trou de fixation récepteur d'un moyen complémentaire de fixation solidarisant l'élément fonctionnel dont ils sont respectivement récepteurs, en particulier d'un moyen de fixation de type mâle-femelle.

Selon un mode préféré de l'invention, ladite patte latérale de fixation s'étend verticalement et vers le haut par rapport au plan moyen défini par ladite pièce monobloc.

Selon un mode préféré de l'invention, ladite patte latérale de fixation comprend un orifice récepteur d'un ergot d'encliquetage porté par le connecteur électrique. Par exemple ledit ergot est porté perpendiculairement au boitier que comprend généralement un connecteur électrique.

De préférence selon l'invention, lesdits moyens de réglage de la position de fixation de ladite pièce monobloc à la cloison de chauffage se positionnent dans des orifices récepteurs disposés entre lesdits éléments de fixation de ladite pièce monobloc.

Selon un mode préféré de l'invention, ladite pièce monobloc comprend des portions de maintien de ladite pièce monobloc à la cloison de chauffage du véhicule, l'une desdites portions de maintien s'étendant entre lesdits premier et second pontets de fixation, et l'autre portion de maintien s'étendant entre ledit second pontet et ladite patte latérale de fixation. Avantageusement selon l'invention, lesdites portions de maintien comportent lesdits orifices récepteurs desdits moyens de réglage.

L'invention a aussi pour objet une partie avant d'un véhicule automobile comprenant une cloison de chauffage transversale à laquelle sont fixés au moins partiellement un essuie-vitre, un boitier à eau et un connecteur électrique, ladite partie avant comprenant un dispositif de fixation dudit essuie-vitre, dudit boitier à eau et dudit connecteur électrique, qui est tel que défini précédemment.

L'invention a aussi pour objet un véhicule automobile comprenant une partie avant telle que définie ci-dessus, et quand la direction du véhicule est du côté gauche du véhicule le pontet de fixation de l'essuie-vitre est situé vers l'extrémité de ladite pièce monobloc la plus à gauche et la patte latérale de fixation du connecteur électrique est située en l'extrémité de ladite pièce monobloc la plus à droite, le pontet de fixation du boitier à eau étant situé entre ces deux éléments de fixation, et quand la direction du véhicule est du côté droit du véhicule le pontet de fixation de l'essuie-vitre est situé vers l'extrémité de ladite pièce monobloc la plus à droite et la patte latérale de fixation du connecteur électrique est située en l'extrémité de ladite pièce monobloc la plus à gauche, le pontet de fixation du boitier à eau étant situé entre ces deux éléments de fixation.

En particulier ladite pièce monobloc se dispose en s'étendant transversalement sensiblement du centre vers l'un des côtés du véhicule selon le côté de la direction du véhicule, de sorte que ladite patte de fixation du connecteur électrique soit située sensiblement au niveau central (transversalement) de la cloison de chauffage et le pontet de fixation de l'essuie-vitre soit du côté proximal au côté de la direction du véhicule. Autrement dit le côté proximal est le côté gauche du véhicule quand le côté de la direction du véhicule est à gauche, et le côté proximal est le côté droit du véhicule quand le côté de la direction est à droite.

On entend par direction du côté gauche ou du côté droit du véhicule, que la colonne de direction est située respectivement côté gauche ou côté droit du véhicule, le conducteur du véhicule étant ainsi installé respectivement côté gauche du véhicule ou côté droit du véhicule.

L'invention a aussi pour objet une gamme de véhicules automobiles tels que définis ci-dessus et qui comportent une cloison de chauffage identique ou similaire pour un côté de direction du véhicule donné.

D'autres particularités et avantages de l'invention ressortiront à la lecture de la description faite ci-après d'un mode de réalisation de l'invention, à titre indicatif mais non limitatif, en référence aux figures annexées et pour lesquelles :
[Fig. 1] représente une vue partielle, en perspective de trois-quarts et de dessus,
d'une partie avant d'un véhicule automobile équipé d'un dispositif de fixation d'éléments fonctionnels selon l'invention ;
[Fig. 2] représente une vue partielle, en perspective de trois-quarts et de dessus, de la partie avant du véhicule automobile selon l'invention, comme illustré à la figure 1 sans le boitier à eau ;
[Fig. 3] représente une vue en perspective depuis le dessus de la pièce de base du dispositif de fixation utilisé en la partie avant du véhicule automobile représentée aux figures 1 et 2 selon l'invention ;
[Fig. 4] représente une vue en perspective de dessus d'une variante d'une pièce de base d'un dispositif de fixation d'éléments fonctionnels utilisable en partie avant d'un véhicule automobile à direction à droite selon l'invention ;
[Fig. 5] représente une vue en perspective de dessus d'une variante d'une pièce de base d'un dispositif de fixation d'éléments fonctionnels utilisable en partie avant d'un véhicule automobile similaire à celui de la figure 4 mais avec une direction à gauche, selon l'invention.

Dans la suite de la description, il est fait référence à un repère XYZ, pour lequel X est la direction longitudinale avant-arrière du véhicule, orientée vers l'arrière, Y est la direction transversale orientée vers la droite du véhicule, et Z est la direction verticale orientée vers le haut du véhicule.

Les notions d'avant et d'arrière, d'inférieur ou de supérieur, sont définies suivant les notions usuelles d'un véhicule automobile.

Des références identiques pourront être utilisées d'une figure à l'autre pour désigner des éléments identiques ou similaires.

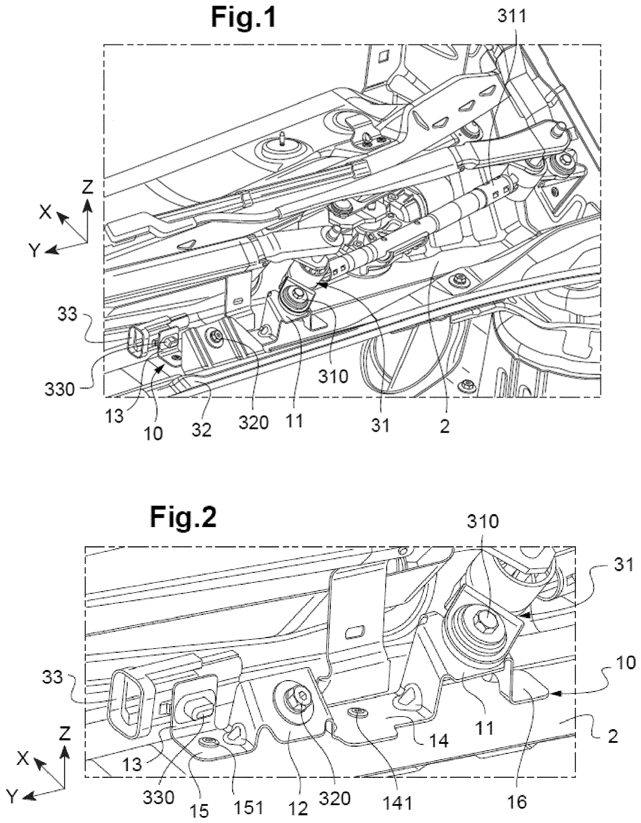

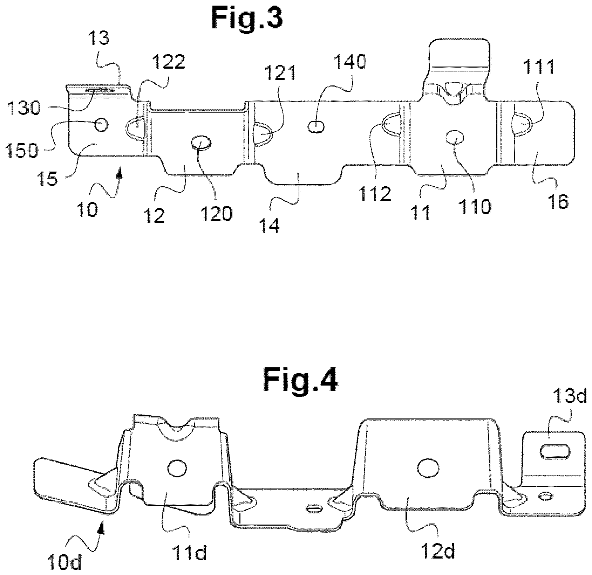

Les figures 1 et 2 représentent des vues partielles, en perspective de trois-quarts et de dessus, d'une partie avant d'un véhicule automobile équipé d'un dispositif de fixation d'éléments fonctionnels selon l'invention, lesdits éléments fonctionnels étant un dispositif essuie-vitre, un boitier à eau et un connecteur électrique. La partie avant du véhicule est représentée partiellement, par son côté gauche, pour l'illustrer au niveau de la cloison de chauffage, paroi séparant l'habitacle du véhicule et le compartiment moteur avant. Sur la figure 2, le boitier à eau n'est pas représenté pour mieux montrer ledit dispositif de fixation installé. Ces figures 1 et 2 vont être décrites en référence aussi à la figure 3 qui représente la pièce de base dudit dispositif de fixation utilisé, présentée orientée selon la direction transversale Y du véhicule.

La partie avant du véhicule automobile comprend une cloison de chauffage transversale 2. Un dispositif de fixation d'éléments fonctionnels du véhicule par fixation à ladite cloison de chauffage, selon l'invention, se dispose transversalement en partie avant du véhicule. Comme énoncé ci-dessus, ces éléments fonctionnels sont un essuie-vitre 31, qui assure l'essuyage du pare-brise (non représenté sur les figures), un boitier à eau 32 qui est un caisson transversal permettant de récupérer et drainer les eaux de ruissellement et assurant l'alimentation en air de l'habitacle, et un connecteur électrique 33 utile au fonctionnement d'organes électriques du véhicule, notamment par exemple pour l'alimentation électrique du moteur électrique dudit essuie-vitre.

Ledit dispositif de fixation comprend une pièce principale 10 formant le support de fixation, récepteur desdits éléments fonctionnels, et qui est une pièce monobloc. Cette pièce monobloc est de forme allongée et s'installe selon son axe principal, transversalement au véhicule (axe Y), au niveau de la cloison de chauffage 2.

Ce support de fixation monobloc 10 comprend trois éléments de fixation 11, 12, 13 disposés suivant l'axe principal de ladite pièce, plus ou moins espacés les uns des autres. Il comprend un premier pontet de fixation 11, récepteur de l'essuie-vitre 31, permettant la fixation de l'essuie-vitre 31, plus particulièrement par fixation d'une extrémité du bras 311 qui supporte et entraîne le/les balais d'essuyage. Un trou de fixation 110 réalisé au centre dudit premier pontet 11 permet d'introduire la vis d'un boulon de fixation 310 se solidarisant à une patte de fixation située en ladite extrémité dudit bras 311 de l'essuie- vitre 31.

Ledit support de fixation monobloc 10 comprend aussi un second pontet de fixation 12 récepteur du boitier à eau 32. Selon l'exemple ce second pontet est légèrement incliné, selon un angle d'inclinaison adapté à la configuration de la partie avant du véhicule, et de la cloison de chauffage 2. Ce second pontet 12 comprend en son centre un trou de fixation 120, qui reçoit la vis d'un boulon de fixation 320 se solidarisant au boitier à eau 32.

Selon l'exemple, ledit second pontet 12 est moins haut que ledit premier pontet 11.

Ledit support de fixation monobloc 10 comprend aussi une patte latérale de fixation 13, réceptrice d'un connecteur électrique 33, ladite patte étant orientée verticalement vers le haut (direction Z). Cette patte 13 comprend en son centre un orifice de fixation 130, de forme sensiblement ovale ou allongée, dans lequel un ergot de fixation 330, solidarisé perpendiculairement à la surface du boitier que comprend ledit connecteur électrique 33, vient s'encliqueter.

Ladite pièce monobloc 10 comprend aussi une première et une deuxième portions de maintien 14, 15, formées de plaques disposées entre les éléments de fixation récepteurs de ladite pièce monobloc 10, c'est-à-dire respectivement entre le premier 11 et le second 12 pontets de fixation, et entre le second pontet de fixation 12 et la patte de fixation latérale verticale 13. Ladite première plaque de maintien 14 est solidarisée aux dits deux pontets de fixation 11, 12 par soudure. (points de soudure 112, 121). Ladite deuxième plaque 15 est soudée (point de soudure 122) audit second pontet 12 d'un côté, et est en prolongement perpendiculaire à ladite patte de fixation latérale verticale 13 de l'autre côté. Ladite deuxième plaque de maintien 15 et ladite patte latérale verticale de fixation 13 sont réalisées dans une seule plaque et par pliage par exemple. Ces première et deuxième plaques de maintien 14, 15 sont sensiblement dans le plan moyen défini par le plan moyen de ladite pièce monobloc, autrement dit elles sont sensiblement horizontales, lesdits pontets 11, 12 s'élevant au-dessus de ce plan moyen. Chaque dite plaque de maintien 14, 15 comprend un trou 140, 150 récepteur d'un rivet de mise en géométrie 141, 151 qui permet de régler la position de ladite pièce monobloc 10, et de maintenir ladite pièce 10 à ladite cloison de chauffage 2.

En l'extrémité de ladite pièce monobloc 10 où se trouve ledit premier pontet de fixation 11, récepteur de l'essuie vitre 31, se trouve une plaque latérale 16, qui est soudée d'un côté dudit pontet (par un point de soudure 111), ladite plaque permettant l'appui de ladite pièce monobloc sur la cloison de chauffage 2. Cette portion latérale 16 permet aussi de faciliter la préhension de ladite pièce monobloc 10.

Ce dispositif de fixation permet de faciliter la fixation des trois éléments fonctionnels essuie-vitre, boitier à eau et connecteur électrique, d'un véhicule automobile à la cloison de chauffage de manière rapide et économique, en regroupant leurs moyens de fixation dans une seule pièce. Il permet d'économiser deux outils d'emboutissage, deux moyens d'assemblage ainsi qu'un gain de masse et de points de soudure, rivets, obturations.

Le dispositif de fixation qui vient d'être décrit est utilisé pour un véhicule dont la direction est située à gauche, soit pour un conducteur assis côté gauche du véhicule. La pièce monobloc 10 s'étend transversalement sensiblement du centre de la cloison de chauffage, autrement dit de la partie médiane (transversalement) du véhicule (Y=0), et s'étend vers la gauche du véhicule (-Y). L'élément de fixation 13 pour le connecteur électrique 33 est disposé côté centre dudit véhicule alors que le pontet de fixation 11 de l'essuie vitre est le plus à gauche du véhicule.

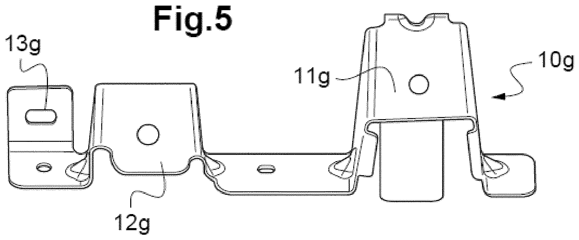

Les figures 4 et 5 représentent chacune une pièce support d'un dispositif de fixation selon l'invention, selon une variante sensiblement différente de celle représentée en figure 3, en fonction de la direction d'un véhicule, ladite pièce étant représentée sur ces figures avec son axe principal orienté selon la direction transversale Y d'un véhicule telle qu'elle serait disposée en partie avant dudit véhicule. La pièce 10d représentée en figure 4 est destinée à un véhicule dont la direction est située à droite. La pièce 10g représentée en figure 5 est destinée au même véhicule mais dont la direction est située à gauche, ou à un véhicule ayant une direction à gauche de la même gamme dont la partie avant est agencée très similairement à celle de ce véhicule.

Les références sur ces figures correspondent à celles utilisées pour la figure 3, augmenté par la lettre « d » pour la figure 4, et par la lettre « g » pour la figure 5. Ces supports de fixation monoblocs 10d, 10g comportent, comme la pièce monobloc10 qui vient d'être décrite en détails, deux pontets de fixation et une patte latérale de fixation, ainsi que des portions réceptrices de moyens de mise en géométrie. Ces composants sont similaires à ceux de la pièce 10 précédemment décrite mais leurs surfaces (largeur, longueur), hauteurs ou leurs inclinaisons peuvent être différentes afin de les adapter à l'agencement de la partie avant du véhicule à équiper.

La pièce monobloc 10d de la figure 4 comprend vers son extrémité la plus à droite le pontet de fixation 11d de l'essuie-vitre alors qu'elle comprend en son extrémité la plus à gauche la patte de fixation latérale verticale 13d réceptrice d'un connecteur électrique, le pontet de fixation du boitier à eau 12d étant situé entre ces deux composants 11d, 13d. Ladite pièce monobloc 10d se dispose en s'étendant transversalement du centre (Y=0) vers la droite (+Y) du véhicule, de sorte que ladite patte de fixation 13d du connecteur électrique soit sensiblement au niveau central (transversalement) de la cloison de chauffage et le pontet de fixation 11d de l'essuie-vitre soit le plus à droite.

Quand la direction du véhicule est à gauche (figure 5), le pontet de fixation 11g de l'essuie-vitre est vers l'extrémité de la pièce monobloc 10g la plus à gauche alors que la patte de fixation 13g du connecteur électrique est en l'extrémité de ladite pièce la plus à droite, le pontet de fixation 12g du boitier à eau restant disposé entre eux. Ladite pièce monobloc10g se dispose en s'étendant transversalement du centre (Y=0) vers la gauche (-Y) du véhicule, de sorte que ladite patte de fixation 13g du connecteur électrique soit sensiblement au niveau central de la cloison de chauffage et le pontet de fixation 11g de l'essuie-vitre soit le plus à gauche.

Les positions du pontet de fixation de l'essuie-vitre et de la patte de fixation du connecteur électrique sont donc inversées en fonction du côté de la direction du véhicule.

Pour un modèle donné de véhicule, il suffit ainsi de concevoir deux pièces supports monoblocs selon que la direction du véhicule est à gauche ou à droite.

En plus des avantages et économies indiqués plus haut que permet le dispositif de fixation selon l'invention, l'uniformisation du type de fixation permet d'avoir une cloison de chauffage commune à toute une gamme de véhicules, par coté de direction (une seule cloison direction à gauche pour toute la gamme et une seule cloison direction à droite pour toute la gamme).

## Revendications

1. Dispositif de fixation d'éléments fonctionnels d'un véhicule automobile à la cloison de chauffage transversale (2) du véhicule, comprenant un support de fixation constitué d'une pièce monobloc allongée (10, 10d, 10g) comportant trois éléments de fixation disposés suivant l'axe principal de ladite pièce, lesdits éléments de fixation étant constitués d'un premier pontet de fixation (11,11d, 11g) récepteur d'un essuie-vitre (31), d'un second pontet de fixation (12, 12d, 12g) récepteur d'un boitier à eau (32), et d'une patte latérale de fixation (13, 13d, 13g) réceptrice d'un connecteur électrique (33) , ledit second pontet étant situé entre ledit premier pontet de fixation et ladite patte latérale de fixation, et ledit dispositif comportant des moyens de réglage (141, 151) de la position de fixation de ladite pièce monobloc à la cloison de chauffage.

2. Dispositif selon la revendication 1, **caractérisé en ce que** ledit premier pontet (11) et ledit second pontet (12) comprennent chacun un trou de fixation (110, 120) récepteur d'un moyen complémentaire de fixation solidarisant l'élément fonctionnel dont ils sont respectivement récepteurs, en particulier d'un moyen de fixation de type mâle-femelle (310, 320)

3. Dispositif selon l'une des revendications 1 à 2,
**caractérisé en ce que** ladite patte latérale de fixation (13) s'étend verticalement et vers le haut par rapport au plan moyen défini par ladite pièce monobloc.

4. Dispositif selon l'une des revendications 1 à 3,
**caractérisé en ce que** ladite patte latérale de fixation (13) comprend un orifice (130) récepteur d'un ergot d'encliquetage (330) porté par le connecteur électrique.

5. Dispositif selon l'une des revendications 1 à 4,
**caractérisé en ce que** lesdits moyens de réglage (141, 151) de la position de fixation de ladite pièce monobloc à la cloison de chauffage (2) se positionnent dans des orifices récepteurs (140, 150) disposés entre lesdits éléments de fixation (11, 12, 13) de ladite pièce monobloc (10).

6. Dispositif selon l'une des revendications 1 à 5,
**caractérisé en ce que** ladite pièce monobloc (10) comprend des portions de maintien (14, 15) de ladite pièce monobloc (10) à la cloison de chauffage (2) du véhicule, l'une desdites portions de maintien (14) s'étendant entre lesdits premier et second pontets de fixation (11, 12), et l'autre portion de maintien (15) s'étendant entre ledit second pontet (12) et ladite patte latérale de fixation (13).

7. Dispositif selon les revendications 5 et 6, **caractérisé en ce que** lesdites portions de maintien (14, 15) comportent lesdits orifices (140, 150) récepteurs desdits moyens de réglage (141, 151).

8. Partie avant d'un véhicule automobile comprenant une cloison de chauffage transversale (2) à laquelle sont fixés au moins partiellement un essuie-vitre (31), un boitier à eau (32) et un connecteur électrique (33), **caractérisé en ce qu'**elle comprend un dispositif de fixation dudit essuie-vitre (31), dudit boitier à eau (32) et dudit connecteur électrique (33), tel que défini aux revendications 1 à 7 .

9. Véhicule automobile comprenant une partie avant définie à la revendication 8, **caractérisé en ce que**, quand la direction du véhicule est du côté gauche du véhicule, le pontet de fixation (11g) de l'essuie-vitre est situé vers l'extrémité de ladite pièce monobloc (10g) la plus à gauche et la patte latérale de fixation (13g) du connecteur électrique est située en l'extrémité de ladite pièce monobloc (10g) la plus à droite, le pontet de fixation du boitier à eau (12g) étant situé entre ces deux éléments de fixation (11g, 13g), et **en ce que**, quand la direction du véhicule est du côté droit du véhicule, le pontet de fixation (11d) de l'essuie-vitre est situé vers l'extrémité de ladite pièce monobloc (10d) la plus à droite et la patte latérale de fixation (13d) du connecteur électrique est située en l'extrémité de ladite pièce monobloc (10d) la plus à gauche, le pontet de fixation du boitier à eau (12d) étant situé entre ces deux éléments de fixation (11d, 13d).

10. Gamme de véhicules automobiles définis selon la revendication 9 et qui comportent une cloison de chauffage identique ou similaire pour un côté de direction du véhicule donné.

## Patentansprüche

1. Vorrichtung zum Befestigen von Funktionselementen eines Kraftfahrzeugs an der quer verlaufenden Spritzwand (2) des Fahrzeugs, beinhaltend einen Befestigungsträger, der aus einem länglichen einstückigen Teil (10, 10d, 10g) besteht, das drei Befestigungselemente umfasst, die gemäß der Hauptachse des Teils angeordnet sind, wobei die Befestigungselemente aus einem ersten Befestigungsbügel (11, 11d, 11g), der einen Scheibenwischer (31) aufnimmt, einem zweiten Befestigungsbügel (12, 12d, 12g), der einen Wasserbehälter (32) aufnimmt, und einer seitlichen Befestigungslasche (13, 13d, 13g), die einen elektrischen Verbinder (33) aufnimmt, bestehen, wobei sich der zweite Bügel zwischen dem ersten Befestigungsbügel und der seitlichen Befestigungslasche befindet und wobei die Vorrichtung Mittel zum Einstellen (141, 151) der Befestigungsposition des einstückigen Teils an der Spritzwand beinhaltet.

2. Vorrichtung nach Anspruch 1, **dadurch gekennzeichnet, dass** der erste Bügel (11) und der zweite Bügel (12) jeweils eine Befestigungsbohrung (110, 120) beinhalten, die ein zusätzliches Befestigungselement, welches das Funktionselement, das sie jeweils aufnehmen, sichert, insbesondere ein Befestigungsmittel vom Typ Stecker-/Buchsenverbindung (310, 320), aufnimmt.

3. Vorrichtung nach einem der Ansprüche 1 bis 2, **dadurch gekennzeichnet, dass** sich die seitliche Befestigungslasche (13) in Bezug auf die Mittelebene, die durch das einstückige Teil definiert wird, vertikal und nach oben erstreckt.

4. Vorrichtung nach einem der Ansprüche 1 bis 3, **dadurch gekennzeichnet, dass** die seitliche Befestigungslasche (13) eine Öffnung (130) beinhaltet, die einen Rastnocken (330) aufnimmt, der durch den elektrischen Verbinder getragen wird.

5. Vorrichtung nach einem der Ansprüche 1 bis 4, **dadurch gekennzeichnet, dass** die Mittel zum Einstellen (141, 151) der Befestigungsposition des einstückigen Teils an der Spritzwand (2) in Aufnahmeöffnungen (140, 150) positioniert sind, die zwischen den Befestigungselementen (11, 12, 13) des einstückigen Teils (10) angeordnet sind.

6. Vorrichtung nach einem der Ansprüche 1 bis 5, **dadurch gekennzeichnet, dass** das einstückige Teil (10) Abschnitte zum Halten (14, 15) des einstückigen Teils (10) an der Spritzwand (2) des Fahrzeugs beinhaltet, wobei sich einer der Halteabschnitte (14) zwischen dem ersten und dem zweiten Befestigungsbügel (11, 12) erstreckt und sich der andere Halteabschnitt (15) zwischen dem zweiten Bügel (12) und der seitlichen Befestigungslasche (13) erstreckt.

7. Vorrichtung nach den Ansprüchen 5 und 6, **dadurch gekennzeichnet, dass** die Halteabschnitte (14, 15) die Öffnungen (140, 150) zur Aufnahme der Einstellmittel (141, 151) umfassen.

8. Vorderer Abschnitt eines Kraftfahrzeugs, der eine quer verlaufende Spritzwand (2) beinhaltet, an der mindestens teilweise ein Scheibenwischer (31), ein Wasserbehälter (32) und ein elektrischer Verbinder (33) befestigt sind, **dadurch gekennzeichnet, dass** sie eine Vorrichtung zur Befestigung des Scheibenwischers (31), des Wasserbehälters (32) und des elektrischen Verbinders (33), wie in den Ansprüchen 1 bis 7 definiert, beinhaltet.

9. Kraftfahrzeug, das einen in Anspruch 8 definierten vorderen Abschnitt beinhaltet, **dadurch gekennzeichnet, dass**, wenn die Lenkung des Fahrzeugs auf der linken Seite des Fahrzeugs erfolgt, sich der Befestigungsbügel (11g) des Scheibenwischers zu dem Ende des einstückigen Teils (10g) hin befindet, das sich am weitesten links befindet, und sich die seitliche Befestigungslasche (13g) des elektrischen Verbinders an dem Ende des einstückigen Teils (10g) befindet, das sich am weitesten rechts befindet, wobei sich der Befestigungsbügel des Wasserbehälters (12g) zwischen diesen zwei Befestigungselementen (11g, 13g) befindet, und dass, wenn die Lenkung des Fahrzeugs auf der rechten Seite des Fahrzeugs erfolgt, sich der Befestigungsbügel (11d) des Scheibenwischers zu dem Ende des einstückigen Teils (10d) hin befindet, das sich am weitesten rechts befindet, und sich die seitliche Befestigungslasche (13d) des elektrischen Verbinders an dem Ende des einstückigen Teils (10d) befindet, das sich am weitesten links befindet, wobei sich der Befestigungsbügel des Wasserbehälters (12d) zwischen diesen zwei Befestigungselementen (11d, 13d) befindet.

10. Palette von Kraftfahrzeugen wie in Anspruch 9 definiert, die für eine gegebene Lenkungsseite des Fahrzeugs eine identische oder ähnliche Spritzwand umfassen.

## Claims

1. Device for fastening functional elements of a motor vehicle to the transverse heating partition (2) of the vehicle, comprising a fastening support constituted of an elongate one-piece component (10, 10d, 10g) having three fastening elements disposed along the main axis of said component, said fastening elements being constituted of a first fastening bridge (11, 11d, 11g) receiving a wiper (31), a second fastening bridge (12, 12d, 12g) receiving a water box (32), and a lateral fastening tab (13, 13d, 13g) receiving an electrical connector (33), said second bridge being situated between said first fastening bridge and said lateral fastening tab, and said device having means (141, 151) for adjusting the fastening position of said one-piece component to the heating partition.

2. Device according to Claim 1, **characterized in that** said first bridge (11) and said second bridge (12) each comprise a fastening hole (110, 120) receiving a complementary fastening means securing the functional element that they respectively receive, in particular a male-female type fastening means (310, 320).

3. Device according to either of Claims 1 and 2, **characterized in that** said lateral fastening tab (13) extends vertically and upward with respect to the mean plane defined by said one-piece component.

4. Device according to one of Claims 1 to 3, **characterized in that** said lateral fastening tab (13) comprises an orifice (130) receiving a snap-fastening lug (330) borne by the electrical connector.

5. Device according to one of Claims 1 to 4, **characterized in that** said means (141, 151) for adjusting the fastening position of said one-piece component to the heating partition (2) are positioned in receiving orifices (140, 150) disposed between said fastening elements (11, 12, 13) of said one-piece component (10).

6. Device according to one of Claims 1 to 5, **characterized in that** said one-piece component (10) comprises portions (14, 15) for holding said one-piece component (10) on the heating partition (2) of the vehicle, one of said holding portions (14) extending between said first and second fastening bridges (11, 12), and the other holding portion (15) extending between said second bridge (12) and said lateral fastening tab (13).

7. Device according to Claims 5 and 6, **characterized in that** said holding portions (14, 15) have said orifices (140, 150) receiving said adjustment means (141, 151).

8. Front part of a motor vehicle, comprising a transverse heating partition (2) to which are at least partially fastened a wiper (31), a water box (32) and an electrical connector (33), **characterized in that** it comprises a device for fastening said wiper (31), said water box (32) and said electrical connector (33), as defined in Claims 1 to 7.

9. Motor vehicle comprising a front part defined in Claim 8, **characterized in that**, when the vehicle is a left-hand drive vehicle, the fastening bridge (11g) for the wiper is situated toward the leftmost end of said one-piece component (10g) and the lateral fastening tab (13g) for the electrical connector is situated at the rightmost end of said one-piece component (10g), the fastening bridge for the water box (12g) being situated between these two fastening elements (11g, 13g), and **in that**, when the vehicle is a right-hand drive vehicle, the fastening bridge (11d) for the wiper is situated toward the rightmost end of said one-piece component (10d) and the lateral fastening tab (13d) for the electrical connector is situated at the leftmost end of said one-piece component (10d), the fastening bridge for the water box (12d) being situated between these two fastening elements (11d, 13d).

10. Range of motor vehicles defined in Claim 9 and that have an identical or similar heating partition for a given driving side of the vehicle.
